# EUROPEAN PATENT SPECIFICATION

(11) **EP 0 502 882 B1**
(45) Date of publication and mention of the grant of the patent: **03.05.2000**
(21) Application number: 90917116.7
(22) Date of filing: 23.11.1990
(51) Int. Cl.: E21B 21/06, B01D 11/02

(54) **METHOD AND APPARATUS FOR CLEANING DRILL CUTTINGS**
VERFAHREN UND VORRICHTUNG ZUR REINIGUNG VON BOHRKLEIN
METHODE ET APPAREIL POUR LE NETTOYAGE DES DEBRIS DE FORAGE

(30) Priority: 28.11.1989 GB 8926893; 22.06.1990 GB 9013964; 07.09.1990 GB 9019592
(43) Date of publication of application: 16.09.1992
(73) Proprietor: RIG TECHNOLOGY LIMITED, Aberdeen AB1 2LP (GB)
(72) Inventor: BAILEY, Marshall, Graham Larsehmor, Kincardineshire AB3 3PY (GB); TYLDSLEY, Derek, Aberdeen AB1 2LP (GB)
(74) Representative: Nash, Keith Wilfrid
(86) International application number: GB9001823
(87) International publication number: WO9108375

(56) References cited:
- WO-A-82/01737
- WO-A-89/02774
- FR-A- 1 228 830
- US-A- 3 693 951
- US-A- 4 040 866
- US-A- 4 434 028

## Description

### Field of the Invention

This invention relates to the cleaning of oil contaminated cuttings arising from drilling operations.

### Background to the Invention

During the drilling of oil and gas wells large quantities of rock particles are produced from the bore hole. The rock particles, typically referred to as cuttings, are carried to the surface of the hole by a continuously circulating fluid, referred to as the drilling fluid or drilling mud. At the surface the cuttings are separated from the bulk of the fluid by mechanical means, typically vibrating screen shakers, hydrocyclones, and centrifuges. Separated cuttings are, however, still mixed with and contaminated by some of the drilling mud which it is impossible to remove solely by mechanical means.

Where as is typical the drilling mud consists of an emulsion of aqueous salt solution in a light oil base, the separated cuttings may have a considerable quantity of oil associated with them.

Oil is retained on cuttings in three ways: as oil mud in a viscous layer on the surface of the cuttings; as oil mud in "free" form trapped in agglomerates of cuttings; and as free oil absorbed into rock pores. Excluding accidental oil spills, the largest source of oil discharge from oil field drilling operations is in the form of drilling mud discharged with drill cuttings. To combat this, legislation has been introduced which limits the concentration of oil on cuttings which can lawfully be discharged. For example, countries bordering the North Sea are working to standardise and improve current legislation, and it is expected that oil discharge levels will be made more stringent in the future.

To meet current legislative requirements, cleaning systems have been developed for offshore application which, under most circumstances, will reduce the oil content on discharged cuttings to below 10% by weight. Some of these systems employ an initial washing technique followed by centrifugal separation and discharge of cleaned solids, and limited recycling of the wash fluid. One known system employs mud based oil as the washing fluid but this suffers from the disadvantage of leaving a coating of oil on the solids and therefore limits the degree to which the cuttings can be cleaned. Another known method utilises a water/surfactant wash solution which, whilst theoretically producing cleaner solids, results in the secondary problem of producing large volumes of oil contaminated wash water for disposal.

Several thermal methods have been attempted which employ either thermal destruction of the hydrocarbons associated with the cuttings, or thermal evaporation of the oil followed by condensation and recovery of oil. Such systems have suffered the disadvantages of high mechanical wear, corrosion, and difficulty in process control due to the variability in properties of the cuttings. In particular, such systems have also had a high energy demand due, in large part, to the necessity to evaporate all water associated with the cuttings.

In particular US 4040866 (MONDSHINE) describes one of the earlier proposals for cleaning contaminated cuttings in which the latter are washed with a two component solvent to dissolve the oil fraction of the contaminating mud to allow subsequent separation by centrifuging or washing of oil-solvent mixture from the cuttings. Unfortunately such processes cannot remove the solvents and/or solvent oil mixture to sufficiently low levels as to meet current regulations without further expensive processing and a process such as described cannot economically be considered.

The new process disclosed in the PCT publication WO82/01737 (HARPSOUND) proposed the use of a halogenated hydrocarbon so!vent. Howver, subsequent regulations mean that such processes cannot be operated economically since the environmental damage caused by the discharge of even traces of such a solvent with the cuttings or in the discharge water is now perceived to be far more damaging than the environmental damage which would result from the escape of similar quantities of oil.

PCT publication WO89/02774 (Novatec Inc) describes a more complex process which relies on heating to produce separation and proposes the use of waste heat to reduce the cost of running the process. However, it is common to both processes that no attempt is made to separate the water from the solvent/oil components and although the latter can be separated from the water/oil solvent mixture by heating, it is nevertheless necessary to heat the water component of the mixture to the same extent as the solvent, before the latter can be driven off. Furthermore, in the Novatec process it has been found necessary to incorporate a steam stripper to remove sufficient of the solvent from the oil/water phase to render the latter capable of being re-used and a large quantity of energy is needed to produce the steam required for this step - which further increases the energy demands of the system proposed.

The thermal requirements of such systems are perhaps best appreciated when it is considered that in an off-shore oil well drilling operation in the North Sea area, the feed to the cuttings cleaning system such as is proposed will lie in the range 3-10 tons of solid cuttings per hour together with between 1 and 4 tons of drilling mud per hour (depending on the diameter of the hole and the rate at which it is being drilled), and the drilling mud can comprise 50% by volume of water. Thus for a low weight drilling mud this could mean the presence of between 1/2 and 2 tons of water to be processed per hour.

A further technique is described in US 4434028 (EP PIG *et al*). This comprises a critical fluids extraction system employing liquified gaseous solvents (CO₂, CH₄ freon etc). The solvents are specified as being gaseous at normal temperature and pressure. The method does not incorporate water separation and requires high energy input to liquify the gases, and also requires large, heavy, pressure equipment.

The present invention aims to provide a novel method of and apparatus for cleaning cuttings which meets the more stringen cleaning requirements shortly to be imposed and which is capable of overcoming the disadvantages of known cleaning systems.

It is also an object of the invention to provide a system which does not generate any known secondary sources of pollution, and which allows the major oil mud constituents to be recycled to the drilling process.

### Summary of the Invention

According to one aspect of the invention there is provided a method of removing oil from cuttings obtained from a drilling operation which are contaminated by drilling mud containing oil, comprising the steps of: adding a solvent to dissolve the oil components of the mud associated with the cuttings, feeding the resultant mixture to a centrifuge for separating the mixture into a first phase containing cuttings solids, and a second phase containing solvent and oil; heating the second phase to drive off the solvent to thereby substantially separate the oil components of the mud; and condensing the solvent to facilitate its recovery, characterised by the step of adding water to the mixture prior to centrifuging.

The invention also extends to apparatus for removing oil from cuttings obtained from a drilling operation which are contaminated by drilling mud containing oil and water comprising: means for mixing the mud and cuttings with a solvent which will dissolve the oil components of the mud and form a slurry; means for conveying the slurry to a centrifuge for separating the more dense cuttings solids and water from the less dense solvent and oil mixture, and delivering the solids and water to a first outlet and the predominantly solvent and oil mixture to a second outlet; first heating means to which the mixture of materials from the second outlet is fed, and wherein the said mixture is heated to drive off as an evaporate the solvent and any water and leave predominantly the oil; collection means to which the oil is conveyed; condensing means to which the evaporate is supplied and from which the solvent and any water are collectable; and collection means for at least the solvent condensate, characterised by means for adding water to the slurry before it is fed to the centrifuge.

Other features of the invention are defined in the appended claims.

### Description of Embodiments

The invention will now be described, by way of example only, with reference to the accompanying drawings, in which:
Figure 1 is a block diagram illustrating a process not in accordance with the invention,
Figure 2 is a block diagram illustrating a modified process not in accordance with the invention, and
Figures 3 to 8 are block diagrams illustrating six methods in accordance with the invention.

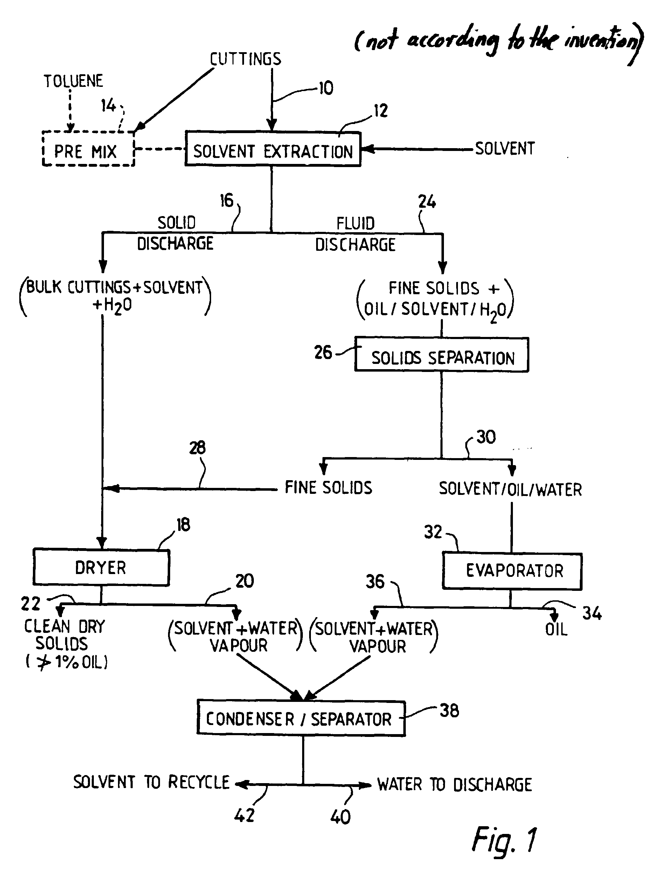

Referring first to Figure 1, drill cuttings from a drilling operation are fed as indicated by arrow 10 into an extractor in which oil is extracted (as indicated at 12) by the application of a solvent, e.g. toluene. Instead of being fed directly into the extractor, the cuttings may optionally be pre-mixed with the solvent to present a slurry feed to the extractor, as shown at 14.

The extractor consists of a closed chamber, separated into a plurality of compartments. A continuous fine mesh belt conveys the cuttings from an inlet end of the extractor, through the compartments in turn and discharges the solids from an outlet end of the extractor into a hopper. Clean solvent is sprayed onto the cuttings in the compartment at the outlet end of the extractor, the solvent filtering through the cuttings and belt being collected in a sump at the base of the compartment. This solvent is then re-circulated by means of a pump to the adjacent compartment immediately upstream (in relation to the direction of movement of the cuttings through the extractor) and the process repeated. Solvent and cuttings are therefore transported in mutually opposite directions through the extractor, with the cleanest solvent contacting the cleanest cuttings at the outlet end of the extractor.

The bulk solids discharged from the extractor at 16 will still be wet, i.e. they will contain solvent and any water absorbed into the particles of the cuttings. These solids are therefore transferred to a dryer 18 where the solvent is evaporated at 20 and the clean dry solids discharged at 22, where the oil content of the solids is typically not greater than tout 1 % by weight.

The fluid discharge 24 from the extractor consists of fine solids plus a solution of water in an oil emulsion dissolved in the solvent. Fine solids are removed at 26 by, for example, a decanting centrifuge and are fed at 28 into the bulk solids which are supplied to the dryer 18. The liquid phase 30 from the centrifuge is transferred to an eveporator 32 where the solvent and water are evaporated from the oil. The oil is recovered at 34 as a useable product and the solvent plus water vapour 36 is combined with the solvent and water vapour 20 from the dryer unit 18 and fed into a condenser/separator 38 where the vapours are condensed. Condensed wter and solvents separate by gravity, the water being discharged at 40 and the solvent being re-cycled at 42 back to the extractor at 12.

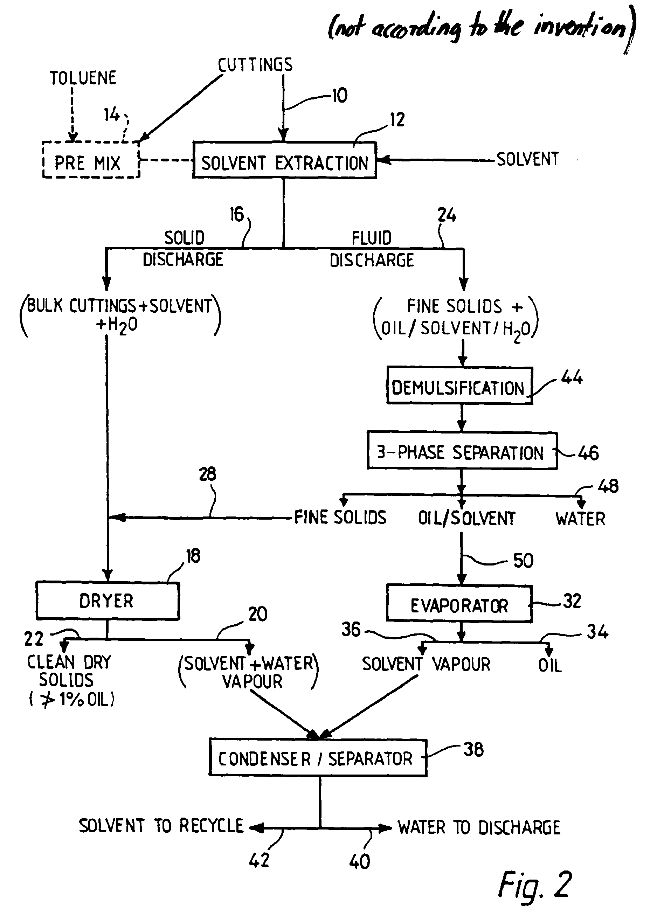

In the modified process shown in Figure 2, equivalent process steps bear the same reference numerals as used in Figure 1. The process is similar except that the fluid discharge 24 from the extractor is subjected to demulsification in order to separate water from the oil/solvent. Hence, the fine solids plus the oil/solvent and water are fed to a demulsification unit 44 where they are exposed to a demulsifying agent. The fluid mixture is then transferred to a three phase separator unit 46, for example a disc stacked centrifuge, where wet solids, oil/solvent and water are separated. As before, the fine solids 28 are reunited with the bulk solids which are fed to the dryer 18, and water is discharged at 48 via a separate treatment system if required. The oil/solvent solution 50 is transferred to the evaporater 32, but this will require less energy than in the evaporator 32 of Figure 1 because a large amount of water has been removed at 48 as a result of the demulsification and subsequent separation.

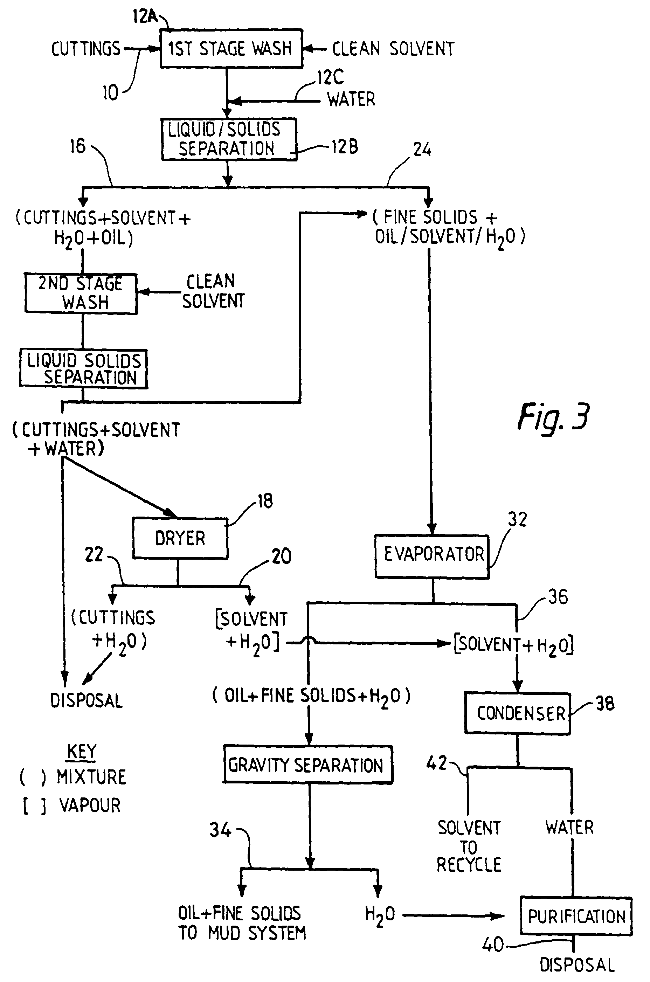

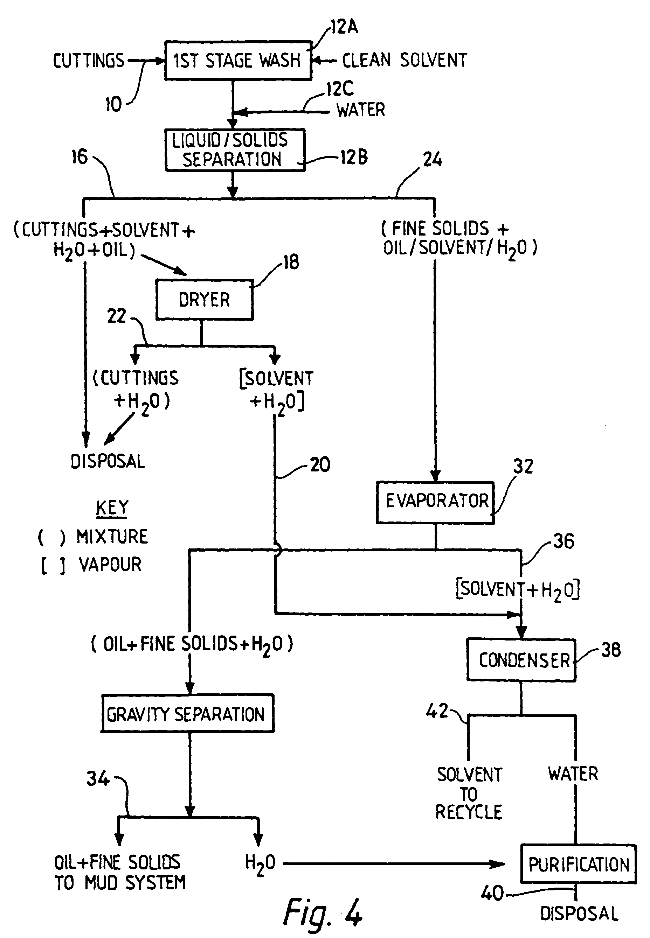

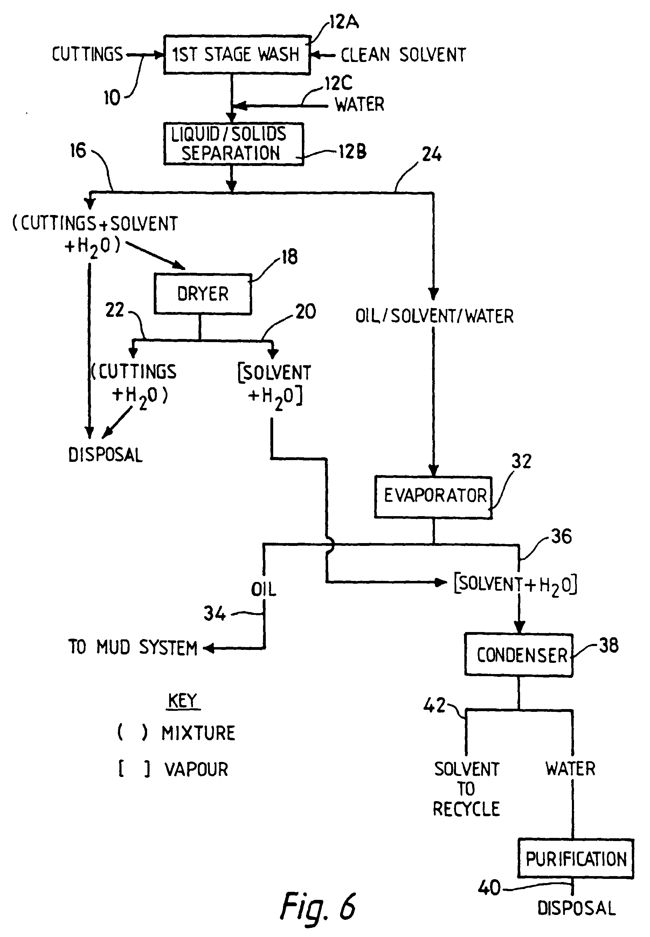

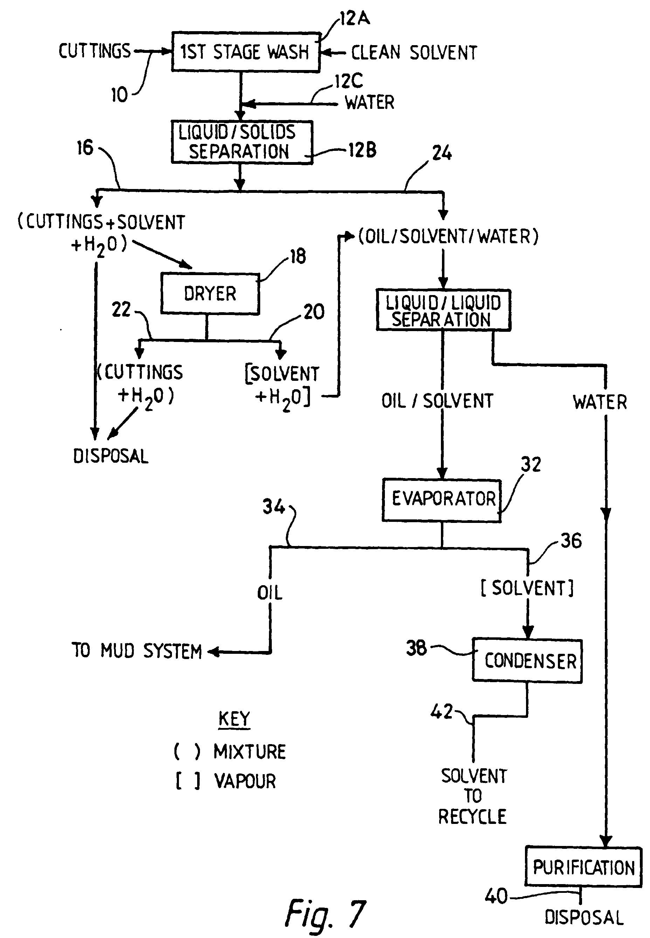

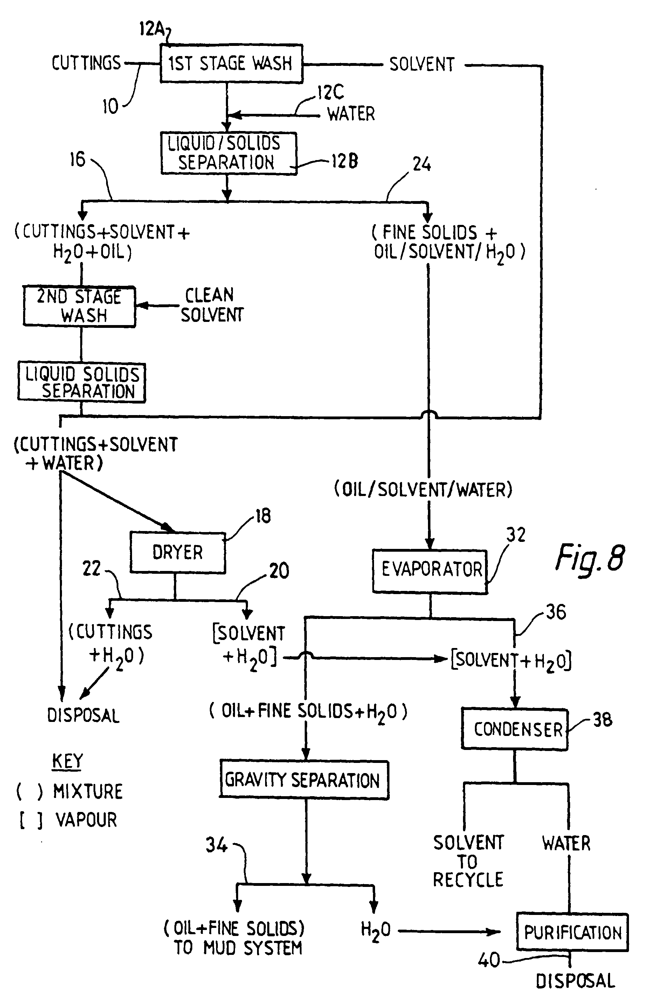

In the methods in accordance with the invention illustrated in Figures 3 to 8, the same reference numerals are again used for the process steps equivalent to those of Figures 1 and 2.

Referring to the drawings collectively, drill cuttings from a drilling operation are fed as indicated by arrow 10 into an extracting means, (comprising a wash stage 12A and a separation stage 12B) in which oil is extracted [as indicated at 12A, 12B] by the application of a solvent, e.g. toluene or other suitable stabilised gasoline fraction.

In accordance with the invention water is added at 12C to the cuttings/solvent slurry prior to the centrifugal separation 12B.

The solids discharged from the extracting means at 16 will be wet, i.e. they will contain solvent and any water absorbed into the cuttings particles. These solids, possibly after second stage washing, are transferred to a dryer 18 where the solvent is evaporated (at 20) and the cleaning cuttings discharged at 22.

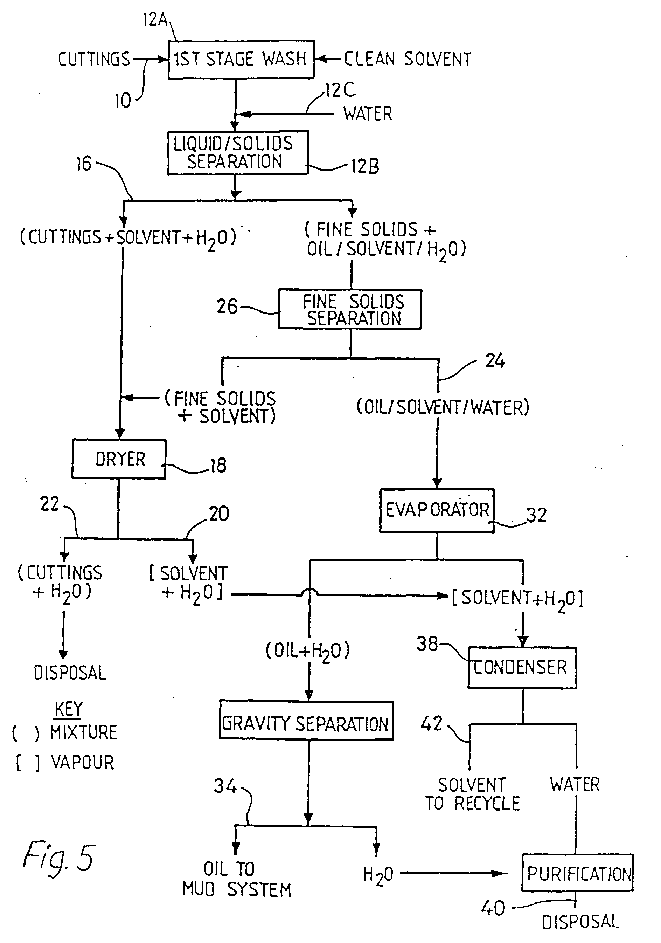

The fluid discharge 24 from the extracting means again consists of fine solids plus a solution of water in oil emulsion dissolved in the solvent. As shown in Figure 5, fine solids may be removed at 26 by, for example, a decanting centrifuge. After optional fine solids removal, the fluid discharge 24 is transferred to an evaporator 32 where the solvent and water are evaporated from the oil. The oil is recovered at 34 as a usable product and the solvent plus water vapour 36, possibly combined with the solvent and water vapour 20 from the dryer unit 18, is fed into a condenser/separator 38 where the vapours are condensed. Condensed water and solvents separate by gravity, the water being discharged at 40 and the solvent being recycled at 42 back to the extractor.

Two examples of the invention, practised in accordance with the methods of any one of Figures 3 to 8, are as follows:-

### EXAMPLE 1

In one series of tests oil contaminated drill cuttings of average composition 80.6% w/w solids, 10.0% w/w water, and 9.4% w/w oil were added at the rate of 6.2 tonnes per hour to an agitated vessel 12A into which was also added a solvent at the rate 7.0 m³ per hour. The solvent used in this case was a stabilised gasoline fraction ex BP Refinery, Grangemouth.

The average residence time of the cuttings in the vessel was 1 minute, and the temperature was 21°C.

The resultant solids/solvent slurry was fed at the rate of 10 m³, via a positive displacement pump, into a solid bowl decanting centrifuge 12B. The centrifuge effected solids/liquid separation to yield a centrate (solvent) phase of average composition 88.3% w/w solvent, 10.4% w/w oil, and 1.1% w/w water. Solids phase exiting the centrifuge had an average composition of 84.9% w/w dry solids, 0.9% w/w oil, 9.2% w/w water, and 5.0% w/w solvent.

The oil dissolved in the solvent phase was recovered by evaporation of the solvent which was subsequently condensed and recovered for re-use. The resultant oil phase, containing 5.1% w/w water and 1.0% w/w residual solvent was considered suitable for re-use in oil based mud preparations.

Solids exiting from the centrifuge were heated to effect evaporation of associated solvent, which was subsequently recovered by condensation. Solids discharged from the dryer unit had an average composition of 89.36% w/w dry solids, 0.95% w/w oil, 9.48% w/w water, and 0.21% w/w solvent.

### EXAMPLE 2

The procedure as described in Example 1 above was repeated, using the same ratios and composition of oil contaminated drill cuttings and solvent, but with the addition of water at the rate of 500 litres per hour to the cuttings/solvent slurry immediately prior to centrifugation, as indicated at 12C in Figures 3 to 8.

The resultant centrate (solvent) phase from the centrifuge 12B had a composition of 86.5% w/w solvent, 9.7% w/w oil, and 3.8% w/w water. Water was allowed to separate by gravity in an intermediate tank and discharged to drain. Solvent was removed by evaporation and subsequently recondensed to yield a fluid of composition of 99.6% w/w solvent and 0.4% w/w water, which was recycled back to the process. Residual oil phase remaining in the evaporator had a composition of 97.0% w/w oil, 2.1% w/w water, and 0.9% w/w solvent, and was considered suitable for re-use in oil based mud preparations.

Solids phase exiting from the centrifuge had an average composition of 82.9% w/w solids, 14.8% w/w water, 0.8% w/w oil, and 1.5% w/w solvent indicating that the addition of water to the centrifuge feed slurry had resulted in a significant lowering of solvent carry through with solids. In this case it was considered that no further solvent removal by heating of the solids phase was necessary prior to discharge.

## Claims

1. A method of removing oil from cuttings obtained from a drilling operation which are contaminated by drilling mud containing oil, comprising the steps of: adding a solvent (12A) to dissolve the oil components of the mud associated with the cuttings, feeding the resultant mixture to a centrifuge (12B) for separating the mixture into a first phase (16) containing cuttings solids, and a second phase (24) containing solvent and oil; heating (32) the second phase to drive off the solvent to thereby substantially separate the oil components of the mud; and condensing (38) the solvent to facilitate its recovery, characterised by the step of adding water (12C) to the mixture prior to centrifuging.

2. A method according to claim 1, in which the amount of water added to the mixture prior to centrifuging is such that the first phase of the mixture has an average composition of 82.9% W/W solids, 14.8% W/W water, 0.8% W/W oil and 1.5% W/W solvent.

3. A method according to claim 1 or claim 2, in which the amount of water added prior to centrifuging is such that the second phase of the mixture has a composition 86.5% W/W solvent, 9.7% W/W oil and 3.8% W/W water.

4. A method as claimed in claim 2 or 3, comprising the additional steps of separating the liquid from the solids making up the first phase materials, heating the separated solids to drive off any solvent and water remaining therein and condensing the evaporate so produced.

5. A method as claimed in any of the preceding claims,
wherein the evaporate driven off during the heating of the first phase materials is mixed with the evaporate produced by the heating of the second phase materials before the condensing step is performed.

6. A method as claimed in any of the preceding claims, wherein any water recovered from the condensing step is purified before discharge.

7. A method according to any of the preceding claims, in which the contaminated solids are exposed to the solvent in an agitating vessel (12A) from which the resultant slurry of solids and liquid is pumped to the centrifuge.

8. A method according to any of the preceding claims, in which the centrifuge is a solid bowl decanting centrifuge.

9. A method according to any of the preceding claims, in which the solvent is Toluene or a stabilised gasoline fraction.

10. Apparatus for removing oil from cuttings obtained from a drilling operation which are contaminated by drilling mud containing oil and water comprising: means for mixing the mud and cuttings with a solvent which will dissolve the oil components of the mud and form a slurry; means for conveying the slurry to a centrifuge (12B) for separating the more dense cuttings solids and water from the less dense solvent and oil mixture, and delivering the solids and water to a first outlet and the predominantly solvent and oil mixture to a second outlet; first heating means (32) to which the mixture of materials from the second outlet (24) is fed, and wherein the said mixture is heated to drive off as an evaporate the solvent and any water and leave predominantly the oil; collection means to which the oil is conveyed; condensing means (38) to which the evaporate is supplied and from which the solvent and any water are collectable; and collection means for at least the solvent condensate, characterised by means for adding water (12C) to the slurry before it is fed to the centrifuge.

11. Apparatus according to claim 10, wherein the mixing means includes means for agitating the mud and cuttings to improve the mixing thereof with the solvent.

12. Apparatus according to claim 10 or 11, further comprising second heating means for heating at least the solid content of the mixture from the first centrifuge outlet (16) to drive off any solvent and water remaining therein and means for condensing the evaporate.

13. Apparatus according to claim 12, further comprising means for combining evaporates from the first and second heating means to feed the combined evaporates to a common condensing means.

14. Apparatus according to any one of claims 10 to 13, further comprising purification means for purifying the water (40) recovered from the condensing means.

## Patentansprüche

1. Ein Verfahren zum Entfernen von Öl aus bei einem Bohrvorgang angefallenem und durch Öl enthaltenden Bohrschlamm verschmutztem Bohrklein mit den Stufen: Zusetzen eines Lösungsmittels (12A) zum Auflösen der mit dem Bohrklein verbundenen Ölbestandteile des Schlamms, Zuführen des entstehenden Gemisches zu einer Zentrifuge (12B) zum Auftrennen des Gemisches in eine Bohrkleinfeststoffe enthaltende erste Phase (16) und eine Lösungsmittel und Öl enthaltende zweite Phase (24), Aufheizen (32) der zweiten Phase zum Austreiben des Lösungsmittels, um damit die Ölbestandteile des Schlamms im wesentlichen abzutrennen, und Kondensieren (38) des Lösungsmittels zum Erleichtern seiner Wiedergewinnung, gekennzeichnet durch die Stufe des Zufügens von Wasser (12C) zum Gemisch vor dem Zentrifugieren.

2. Ein Verfahren nach Anspruch 1, bei dem die Menge des dem Gemisch vor dem Zentrifugieren zugefügten Wassers derart ist, daß die erste Phase des Gemischs eine Durchschnittszusammensetzung von 82,9 % W/W Feststoffe, 14,8 % W/W Wasser, 0,8 % W/W Öl und 1,5 % W/W Lösungsmittel aufweist.

3. Ein Verfahren nach Anspruch 1 oder Anspruch 2, bei dem die Menge des vor dem Zentrifugieren zugesetzten Wassers derart ist, daß die zweite Phase des Gemisches eine Zusammensetzung von 86,5 % W/W Lösungsmittel, 9,7 % W/W Öl und 3,8 % W/W Wasser aufweist.

4. Ein Verfahren wie in Anspruch 2 oder 3 beansprucht, mit den zusätzlichen Stufen des Abtrennens der Flüssigkeit von den die erste Phase der Stoffe bildenden Feststoffen, Aufheizen der abgetrennten Feststoffe zum Austreiben jeglichen verbliebenen Lösungsmittels und verbliebenen Wassers und Kondensieren des auf diese Weise gewonnenen Evaporats.

5. Ein Verfahren wie in irgendeinem der vorhergehenden Patentansprüche beansprucht, wobei das während des Aufheizens der ersten Phase der Stoffe ausgetriebene Evaporat mit dem durch das Aufheizen der zweiten Phase der Stoffe erzeugten Evaporat vor dem Durchführen der Kondensationsstufe gemischt wird.

6. Ein Verfahren wie in irgendeinem der vorhergehenden Patentansprüche beansprucht, wobei jedes bei der Kondensationsstufe wiedergewonnene Wasser vor seiner Abgabe gereinigt wird.

7. Ein Verfahren nach irgendeinem der vorhergehenden Ansprüche, bei dem die verschmutzten Feststoffe dem Lösungsmittel in einem Rührgefäß (12A) ausgesetzt werden, aus dem die sich ergebende Aufschlämmung aus Feststoffen und Flüssigkeiten der Zentrifuge zugepumpt wird.

8. Ein Verfahren nach irgendeinem der vorhergehenden Ansprüche, bei dem die Zentrifuge eine Dekantierzentrifuge mit festem Kessel ist.

9. Ein Verfahren nach irgendeinem der vorhergehenden Ansprüche, bei dem das Lösungsmittel Toluol oder eine stabilisierte Gasolinfraktion ist.

10. Vorrichtung zum Entfernen von Öl aus bei einem Bohrvorgang anfallendem und durch Öl und Wasser enthaltenden Ölschlamm verschmutztem Bohrklein mit einem Mittel zum Mischen des Schlamms und des Bohrkleins mit einem Lösungsmittel, das die Ölbestandteile des Schlamms auflöst und eine Aufschlämmung bildet, einem Mittel zum Fördern der Aufschlämmung zu einer Zentrifuge (12B) zum Trennen der dichteren Bohrkleinfeststoffe und Wasser von dem weniger dichten Lösungsmittel und Ölgemisch und Zuführen der Feststoffe und des Wassers zu einem ersten Auslaß und des vorwiegenden Lösungsmittel- und Ölgemischs zu einem zweiten Auslaß, einem ersten Heizmittel (32), dem das Stoffgemisch vom zweiten Auslaß (24) zugeführt wird, und wobei das Gemisch zum Austreiben des Lösungsmittets und jeden Wassers als ein Evaporat aufgeheizt wird und vorwiegend Öl zurückläßt, mit einem Sammelmittel, dem das Öl zugeführt wird, mit Kondensierungsmitteln (38), denen das Evaporat zugeleitet wird und von dem ausgehend das Lösungsmittel und jedes Wasser aufgesammelt werden kann, und mit Sammelmitteln für mindestens das Lösungsmittelkondensat, gekennzeichnet durch Mittel zum Zusetzen von Wasser (12C) zu der Aufschlämmung vor deren Zuführung zur Zentrifuge.

11. Vorrichtung nach Anspruch 10, wobei das Mischmittel Mittel zum Rühren des Schlamms und des Bohrkleins zum Verbessern von deren Vermischen mit dem Lösungsmittel enthält.

12. Vorrichtung nach Anspruch 10 oder 11, weiter mit zweiten Heizmitteln zum Aufheizen von mindestens dem Feststoffgehalt des Gemischs aus dem ersten Zentrifugenauslaß (16) zum Austreiben von jedem in diesem verbliebenen Lösungsmittel und Wasser und mit Mitteln zum Kondensieren des Evaporats.

13. Vorrichtung nach Anspruch 12, weiter mit Mitteln zum Zusammenlegen der Evaporate aus dem ersten und dem zweiten Heizmittel zum Zuführen der zusammengelegten Evaporate zu einem gemeinsamen Kondensationsmittel.

14. Vorrichtung nach irgendeinem der Ansprüche 10 bis 13, weiter mit Reinigungsmitteln zum Reinigen des von den Kondensationsmitteln wiedergewonnenen Wassers (40).

## Revendications

1. Un procédé pour éliminer l'huile de débris obtenus à partir d'une opération de forage, qui sont contaminés par la boue de forage renfermant de l'huile, comportant les étapes consistant à ajouter un solvant (12A) pour dissoudre les composants huileux de la boue, associés aux débris, transférer le mélange résultant à une centrifugeuse (12B) pour séparer le mélange en une première phase (16) renfermant les débris solides et une seconde phase (24) renfermant le solvant et l'huile ; chauffer (en 32) la seconde phase afin d'éliminer le solvant de façon à séparer, de ce fait, essentiellement les composants huileux de la boue ; et condenser (en 38) le solvant (38) afin de faciliter sa récupération, caractérisé par l'étape d'ajouter de l'eau (12C) au mélange avant la centrifugation.

2. Un procédé selon la revendication 1, dans lequel la quantité d'eau ajoutée au mélange avant la centrifugation est telle que la première phase du mélange présente une composition moyenne de 82,9 % p/p de produits solides, 14,8 % p/p d'eau, 0,8 % p/p d'huile et 1,5 % p/p de solvant.

3. Un procédé selon la revendication 1 ou la revendication 2, dans lequel la quantité d'eau ajoutée avant la centrifugation est telle que la seconde phase du mélange présente une composition de 86,5 % p/p de solvant, 9,7 % p/p d'huile et 3,8 % p/p d'eau.

4. Un procédé tel que revendiqué dans la revendication 2 ou 3, comportant les étapes supplémentaires de séparer le liquide des solides constituant les matériaux de la première phase, de chauffer les produits solides séparés afin d'éliminer le solvant et l'eau qui s'y trouvent, et de condenser le produit d'évaporation ainsi produit.

5. Un procédé tel que revendiqué dans l'une quelconque des revendications précédentes, dans lequel le produit d'évaporation évacué pendant le chauffage des matériaux de la première phase est mélangé avec le produit d'évaporation produit par le chauffage des matériaux de la seconde phase avant que l'étape de condensation ne soit réalisée.

6. Un procédé tel que revendiqué dans l'une quelconque des revendications précédentes, dans lequel l'eau récupérée dans l'étape de condensation est purifiée avant évacuation.

7. Un procédé selon l'une quelconque des revendications précédentes, dans lequel les produits solides contaminés sont exposés au solvant dans un récipient sous agitation (12A) à partir duquel la bouillie résultante de produits solides et de liquide est pompée vers la centrifugeuse.

8. Un procédé selon l'une quelconque des revendications précédentes, dans lequel la centrifugeuse est une centrifugeuse à décantation à bol plein pour produits solides.

9. Un procédé selon l'une quelconque des revendications précédentes, dans lequel le solvant est du toluène ou une fraction stabilisée d'essence.

10. Appareil pour éliminer l'huile provenant de débris obtenus à partir d'une opération de forage, qui sont contaminés par de la boue de forage renfermant de l'huile et de l'eau, comportant : des moyens pour mélanger la boue et les débris avec un solvant qui dissoudra les composants huileux de la boue et formera une bouillie ; des moyens pour transférer la bouillie à une centrifugeuse (12B) afin de séparer les débris solides très denses et l'eau du mélange solvant et huile moins dense, et transférer les produits solides et l'eau jusqu'à une première sortie, et le mélange est constitué de façon prédominante, de solvant et d'huile à une seconde sortie ; des premiers moyens (32) de chauffage auxquels le mélange de matériaux provenant de la seconde sortie (24) est transféré, et dans lequel ledit mélange est chauffé pour éliminer par évaporation le solvant et l'eau éventuelle tout en absorbant, de façon prédominante, l'huile ; des moyens de récupération (38) dans lesquels l'huile est transférée ; des moyens de compensation auxquels le produit d'évaporation est transféré et à partir desquels le solvant et l'eau éventuels sont susceptibles d'être récupérés ; et des moyens de récupération pour au moins le condensat de solvant, caractérisé par des moyens pour ajouter de l'eau (12c) à la bouillie avant qu'elle soit transférée dans la centrifugeuse.

11. Appareil selon la revendication 10, dans lequel les moyens de mélange comportent des moyens pour agiter la boue et les débris afin d'améliorer leurs mélanges avec le solvant.

12. Appareil selon la revendication 10 ou 11, comportant en outre des seconds moyens de chauffage pour chauffer au moins le contenu de produits solides du mélange provenant de la première sortie de la centrifugeuse (16) afin d'éliminer du solvant et de l'eau, qui s'y trouvent, et des moyens pour condenser les produits d'évaporation.

13. Appareil selon la revendication 12, comportant en outre des moyens pour combiner les produits d'évaporation provenant des premier et second moyens de chauffage afin de transférer les produits d'évaporation combinés vers des moyens de condensation habituels.

14. Appareil selon l'une quelconque des revendications 10 à 13, comportant en outre des moyens de purification pour purifier l'eau (40) récupérée à partir des moyens de condensation.
